# FASCICULE DE BREVET EUROPEEN

(11) **EP 0 722 413 B1**
(45) Date de publication et mention de la délivrance du brevet: **04.02.1998**
(21) Numéro de dépôt: 94929589.3
(22) Date de dépôt: 06.10.1994
(51) Int. Cl.: B65G 49/06

(54) **APPAREIL DE POSE DE VITRINE DE MAGASIN**
VORRICHTUNG ZUM STELLEN EINER GLASSCHEIBE FÜR EINEN LADEN
DEVICE FOR FITTING SHOP WINDOWS

(30) Priorité: 06.10.1993 FR 9312093
(43) Date de publication de la demande: 24.07.1996
(73) Titulaire: Epstein, Benoit-Dov, F-14140 Tortisambert (FR)
(72) Inventeur: Epstein, Benoit-Dov, F-14140 Tortisambert (FR)
(74) Mandataire: Schmit, Christian Norbert Marie
(86) Numéro de dépôt international: FR9401171
(87) Numéro de publication internationale: WO9509788

(56) Documents cités:
- DE-A- 2 602 622
- DE-U- 9 212 775
- FR-A- 1 242 782
- US-A- 4 676 713
- US-A- 4 884 938

## Description

La présente invention concerne un appareil de pose de vitrine de magasin (voir par exemple DE-A-2 602 622).

Un premier type d'appareils existants de pose de vitrine de magasin consiste en des chariots bas et étroits à quatre roues, dont deux pivotantes, qui permettent de placer une vitrine verticalement à l'intérieur du chariot dont les montants pincent les parties inférieures de la vitrine en supportant une grande partie du poids. Tenue manuellement à la ventouse par deux vitriers, la vitrine est roulée vers son cadre et mise en position parallèlement, puis hissée à force des bras sur des cales préalablement posées.

On connait également des grues hydrauliques montées sur camion dont les mouvements sont de type circulaire, à cause de l'action des vérins proches des moyeux de rotation. Ces systèmes ne permettent donc pas d'approcher une vitrine de son cadre à moins de quelques centimètres. De plus, les mouvements hydrauliques sont peu contrôlables en précision (lenteur contrôlée de démarrage, d'arrêt et de descente le bras tendu).

Outre, ce manque de précision dans les mouvements, les grues hydrauliques présentent d'autres inconvénients :
- nécessité d'au moins trois opérateurs : un aux manettes, et au moins deux à la pose rapprochée, en fonction du poids de la vitrine,
- entretien difficile, fréquent et coûteux des systèmes hydrauliques,
- danger pour les opérateurs rapprochés en contact avec le verre,
- nécessité de poser deux cales qui supportent le poids de la vitrine sur le cadre avant que celle-ci ne soit posée, ce qui représente par la suite l'inconvénient d'ajustements de cales difficiles et dangereux. Il peut en résulter que des vitrines se fendent soit à cause d'un choc thermique, soit parce qu'elles ont une courbure par rapport au cadre qu'il est difficile de corriger dans chacun des deux plans,
- impossibilité d'utiliser ce type d'appareils de pose lorsque l'on rencontre des trottoirs, ou des marchepieds entre les machines hydrauliques et les cadres de vitrine,
- impossibilité également d'approcher la vitrine en raison du coude supérieur du bras articulé des grues, lorsque l'on rencontre des balcons, des avancées dont la partie inférieure est proche du sommet des cadres des vitrines à remplacer,
- impossibilité pour les camions grues de s'approcher des cadres en raison de rues trop étroites ou trop larges, d'arbres et/ou de mobiliers urbains qui leur font obstacle,
- nécessité de couples de démarrage et de freinage tels qu'aucune machine hydraulique ne peut jusqu'à présent travailler réellement et/ou durablement en mouvement submillimètrique sans risques de rupture du verre,
- apparition sur ces machines connues de débuts de mouvements "retour" également préjudiciables.

Aussi, le but de la présente invention est de remédier aux inconvénients précités en proposant un appareil de pose de vitrine de magasin qui permettrait de travailler, avec une seule personne, en toute sécurité, indépendance, et précision, et surtout avec la lenteur nécessaire au moment où la vitrine est sur le point d'être posée.

Ce but est atteint, selon la présente invention, du fait que ledit appareil comporte :
- un socle muni de moyens de roulement,
- au moins deux moyens élévateurs indépendants verticaux, fixés sur ledit socle,
- un canon supporté par lesdits moyens élévateurs et comprenant des moyens de translation axiale,
- un cadre porte-ventouses disposé à une extrémité dudit canon,
- deux moyens indépendants de translation transversale du canon, disposés aux sommets de deux moyens élévateurs,
- des moyens de rotation dudit cadre porte-ventouses, d'une part autour de l'axe dudit canon, et d'autre part autour d'un axe parallèle à la direction du mouvement des moyens élévateurs.

Ainsi, l'appareil de l'invention peut être manié d'une seule main. Son couple de démarrage est tel (moins de 15 Newtons) que l'on peut effectuer et contrôler des mouvements ascendants, latéraux ou transversaux de l'ordre du quart de millimètre.

Avantageusement, l'invention prévoit que lesdits moyens élévateurs sont constitués, chacun, par un mât vertical comprenant une vis sans fin dont la rotation est bloquée au moins à une extrémité, et mobile en seule translation axiale sous l'action d'un organe de levage à écrou.

De même, selon un mode de réalisation préféré de l'invention, ledit canon comprend une vis sans fin dont la rotation est bloquée, formant moyens de translation axiale avec au moins un dispositif à écrou.

Enfin, il est également prévu que lesdits moyens indépendants de translation transversale du canon comportent, chacun, un dispositif à vis sans fin perpendiculaire au canon, entraînant en translation transversale au moins un écrou solidaire dudit canon.

Cette conception mécanique de l'appareil conforme à l'invention, basée sur l'utilisation de vis sans fin pour opérer dans les trois dimensions et dont certaines sont obligées en mouvement linéaire, permet d'obtenir que les mouvements verticaux, comme les mouvements latéraux coexistent harmonieusement tant en parallèle qu'en opposition. Il est possible par exemple, de produire un mouvement circulaire de correction de déclivité des rues.

Le demandeur a estimé que le temps de pose moyen d'une vitrine de 150 Kg entre le moment où l'appareil de l'invention est présenté au porte-verre latéral du camion jusqu'à la pose parfaite de la vitrine, hors pareclosage, était inférieur au quart d'heure en conditions normales.

Bien entendu, la charge utile peut dépasser largement la valeur précitée pour atteindre 400 kg, sans provoquer de flambage de l'appareil.

La description qui va suivre en regard des dessins annexés, donnés à titre d'exemples non limitatifs, fera bien comprendre en quoi consiste l'invention et comment elle peut être réalisée.

Les figures 1a, 1b, et 1c sont des vues de côté, de face et de dessus d'un appareil de pose de vitrine de magasin, conforme à l'invention.

La figure 2 est une vue de côté d'un dispositif anti-levage de la vis sans fin d'un mât de l'appareil des figures 1a, 1b, 1c.

Les figures 3a, 3b et 3c sont des vues de dessus, de côté et de face de premiers moyens de translation transversale du canon de l'appareil de l'invention.

Les figures 4a, 4b et 4c sont des vues de dessus, de côté et de face de seconds moyens de translation transversale du canon de l'appareil de l'invention.

Les figures 5a et 5b sont des vues de face et de côté de la platine fixe des moyens de rotation du cadre porte-ventouses de l'appareil de l'invention autour de l'axe du canon.

Les figures 6a et 6b sont des vues de face et de côté de la platine mobile des moyens de rotation du cadre porte-ventouses de l'appareil de l'invention autour de l'axe du canon.

Les figures 7a, 7b et 7c sont des vues de face, de côté et de dessus de la tête fixe des moyens de rotation du cadre porte-ventouses de l'appareil de l'invention autour d'un axe vertical.

Les figures 8a et 8b sont des vues de face et de côté de la tête pivotante des moyens de rotation du cadre porte-ventouses de l'appareil de l'invention autour d'un axe vertical.

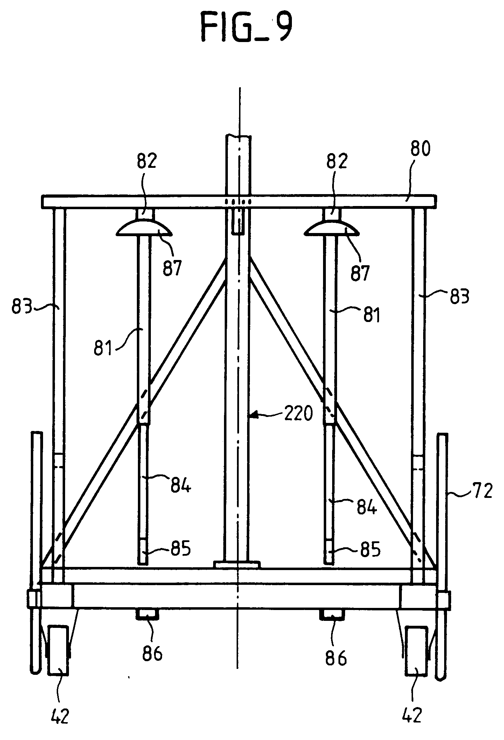

La figure 9 est une vue de face de la barre de guidage et des leviers mobiles de démarrage de l'appareil de l'invention.

la figure 10 est une vue de face d'un cric de manoeuvre des roues supplémentaires des figures 1a et 1b.

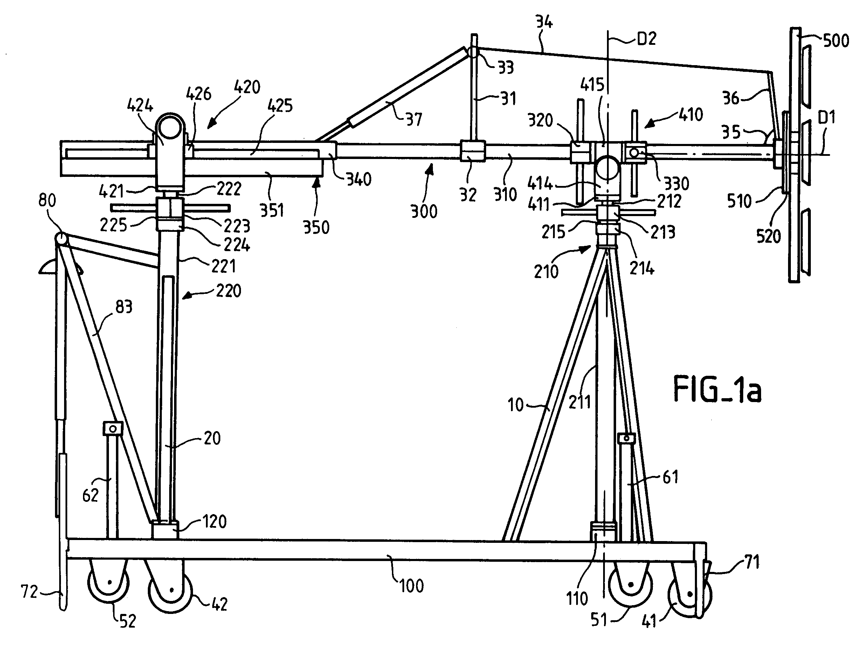

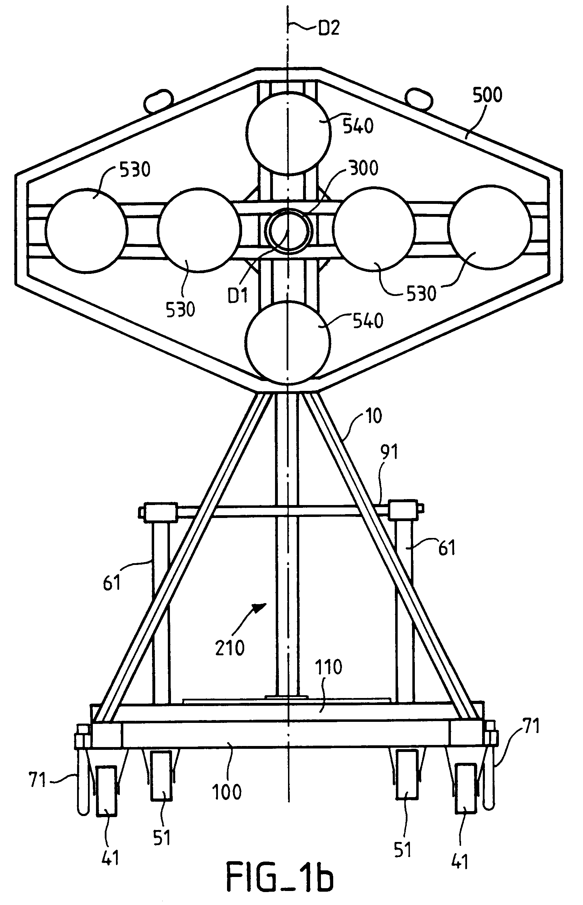

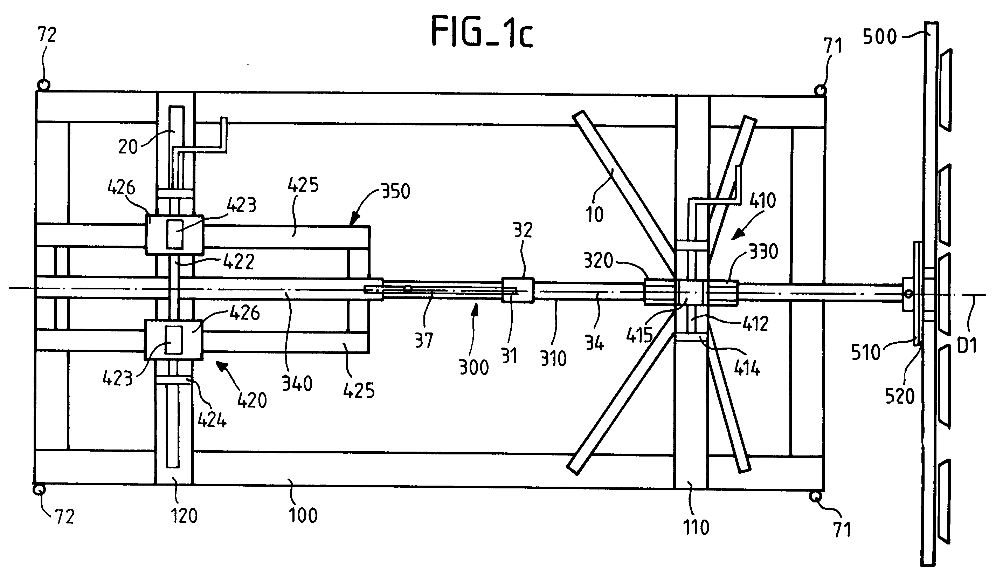

Les figures 1a, 1b et 1c montrent en vues de côté, de face et de dessus, un appareil pour la pose de vitrine de magasin comportant :
- un socle 100 muni de moyens 41, 42 de roulement,
- deux moyens élévateurs 210, 220 indépendants verticaux, fixés sur ledit socle 100,
- un canon 300 supporté par lesdits moyens élévateurs 210, 220 et comprenant des moyens 310, 320, 330 de translation axiale,
- un cadre 500 porte-ventouses disposé à une extrémité avant dudit canon 300 par rapport au sens d'avancement de l'appareil,
- deux moyens 410, 420 indépendants, dits respectivement château-avant et château-arrière, de translation transversale du canon 300, disposés aux sommets des moyens élévateurs 210, 220,
- des moyens 510, 520 de rotation du cadre 500 porte-ventouses autour de l'axe D1 du canon 300, et des moyens 610, 620, non représentés sur les figures 1a, 1b, 1c, de rotation autour d'un axe D2 qui, au repos, est parallèle à la direction du mouvement des moyens élévateurs 210, 220, c'est à dire la direction verticale, et dans leur axe.

Comme l'indique la figure 1a, lesdits moyens élévateurs sont constitués par un mât avant 210 et un mat arrière 220 verticaux comprenant, chacun, un tube creux 211, 221 soudé parfaitement verticalement au centre respectif de barres 110, 120 de largeur du socle 100.

Le tube creux 211 du mat avant 210 est consolidé par quatres fers 10 de section carrée qui, du sommet du mât, descendent vers les longueurs du socle 100 en forme de pyramide, mais ayant une embase rectangulaire. A l'arrière, deux fers carrés 20 partent sous le sommet du tube creux 221 vers les longueurs du socle 100 et perpendiculairement à l'axe D1 du canon 300.

Chacun des mats 210, 220 est terminé par une section rigoureusement horizontale dans laquelle pénètre, parfaitement ajusté, un manchon 214, 224 dont la partie supérieure est élargie et un peu surélevée, et reçoit une butée 215, 225 à bille, c'est à dire un roulement à bille à plat.

Dans chacun des tubes creux 211, 221 des mâts 210, 220 est insérée sans jeu une vis 212, 222 sans fin de précision à filet unique, montée de façon à ce que tout mouvement ou commencement de mouvement de rotation soit bloqué à au moins une extrémité de ladite vis. A cet effet par exemple, l'extrémité supérieure desdites vis sans fin est fixée à une platine 411, 421 portant respectivement les moyens 410, 420 indépendants de translation transversale du canon 300.

La partie supérieure de chaque vis 212, 222 sans fin reçoit, au-dessus du manchon 214, 224 et de la butée 215, 225 à bille correspondante, un organe de levage a écrou 213, 223 muni de deux axes en fer soudés de part et d'autre de ces écrous et servant de poignées de manivelle. Les écrous 213, 223 sont posés sur la partie supérieure de la butée 215, 225 à bille, formant surface d'appui.

Ainsi, les vis 212, 222 sans fin n'ayant pas la possibilité de pivoter sur elles-même, la mise en rotation des organes de levage à écrous 213, 223 impose auxdites vis sans fin un seul mouvement de translation axiale de montée ou de descente, à volonté. Les mouvements relatifs d'un mât par rapport à l'autre peuvent être effectués en parallèle ou en opposition , à la vitesse désirée, et pratiquement sans jeu.

La base de chaque vis 212, 222 sans fin porte un moyen d'arrêt de fin de course constitué par un organe faisant saillie, telle qu'une croix métallique, non représentée, soudée à l'extrémité inférieure desdites vis sans fin. En fin de course, ladite croix vient buter contre le bord inférieur du manchon 214, 224 situé à l'intérieur du tube creux 211, 221. Les croix métalliques servent également de guide pour l'axe des vis 212, 222 sans fin dans leur mouvement de translation et permettent d'éviter tout jeu dans les tubes creux 211, 221.

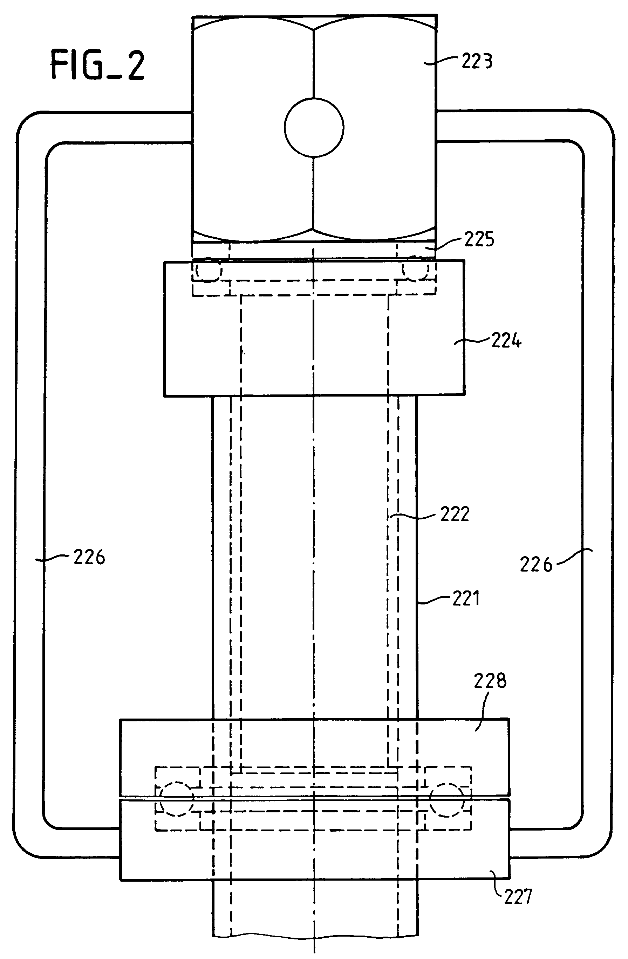

La figure 2 représente un dispositif anti-levage, aménagé dans le mât arrière 220, destiné à éviter tout mouvement de la vis 222 sans fin hors du tube creux 221 lorsque la vitrine à poser a un poids important.

Ce dispositif anti-levage comprend, d'une part, une bague mobile 227 le long du tube creux 221, solidarisée à la vis 222 sans fin par deux tiges 226 soudées à l'écrou 223, et, d'autre part, une bague fixe 228 soudée au tube creux 221 et formant butée pour ladite bague mobile 227 en cas de soulèvement de la vis 222 sans fin.

Conformément aux figures 1a et 1c, le canon 300 comprend à l'avant des moyens de jonction au cadre 500 porte-ventouses qui seront décrits en détail plus loin.

La partie centrale du canon 300 est constituée par une vis 310 sans fin dont la rotation est bloquée, tout comme les vis 212, 222 sans fin des mats. Pour ce faire, l'extrémité arrière de ladite vis 310 sans fin est emmanchée dans un tube 340 creux à section carrée, fixé sur un berceau 350. Pratiquement, ledit tube creux 340 est sectionné en son milieu, puis, après avoir emmanché la vis 310 sans fin, les deux parties du tube sont mécano-soudées.

La vis 310 sans fin forme avec deux dispositifs 320, 330 à écrou muni de deux tiges de fer servant de manivelle, des moyens de translation axiale du canon 300 vers l'avant comme vers l'arrière. Lesdits dispositifs 320, 330 à écrou sont disposés de part et d'autre du château-avant 410 et peuvent servir, soit pour translater axialement le canon 300, soit pour bloquer ledit canon en position axiale.

En définitive, la vis 310 sans fin du canon fonctionne exactement de la même façon que les vis 212, 222 sans fin des moyens 210, 220 élévateurs : le mouvement de rotation des dispositifs 320, 330 à écrou entraîne un mouvement de translation de la vis sans fin, du fait que la rotation de cette dernière est bloquée par le tube creux 340 fixé sur le berceau 350 fixe.

De manière à éviter toute flexion du canon 300 sous l'effet d'une charge importante ou lorsque l'on veut travailler en bout de portée vers l'avant, il est prévu un dispositif anti-flexion comprenant une tige verticale 31 médiane, solidaire d'un écrou 32 fixé sur la vis 310 sans fin par une goupille. Ladite tige 31 porte une poulie 33 sur laquelle passe un câble 34 relié à une extrémité audit tube 340 à section carrée, et à une autre extrémité à une deuxième tige 36 fixée par une jambe 35 de force à l'extrémité de la vis 310 sans fin de canon 300, portant le cadre 500 porte-ventouses. Le câble 34 peut être ajusté à l'aide d'un tendeur 37 qui transforme toute flexion du canon 300 en compression en son âme et en tension dans le câble. Ce dispositif anti-flexion permet donc d'opérer en toute sécurité même sous charge lourde.

D'une manière générale, le château-avant 410 et le château-arrière 420, formant les moyens indépendants de translation transversale qui commandent le mouvement de lacet du canon 300, comportent, chacun, un dispositif à vis 412, 422 sans fin à manivelle, perpendiculaire au canon 300 et entraînant en translation transversale par rapport à l'axe D1 du canon 300 au moins un écrou 413, 423 solidaire dudit canon. Les vis 412, 422 sans fin fonctionnent donc de manière inverse des vis sans fin précédemment décrites en référence aux mâts 210, 220 et au canon 300. Dans le cas des deux châteaux 410, 420, les vis sans fin sont libres de tourner autour de leur axe, tandis que les écrous 412, 423 ont, au contraire leur mouvement de rotation bloquée, ce qui provoque leur déplacement axial le long des vis sans fin sur lesquelles ils sont montés.

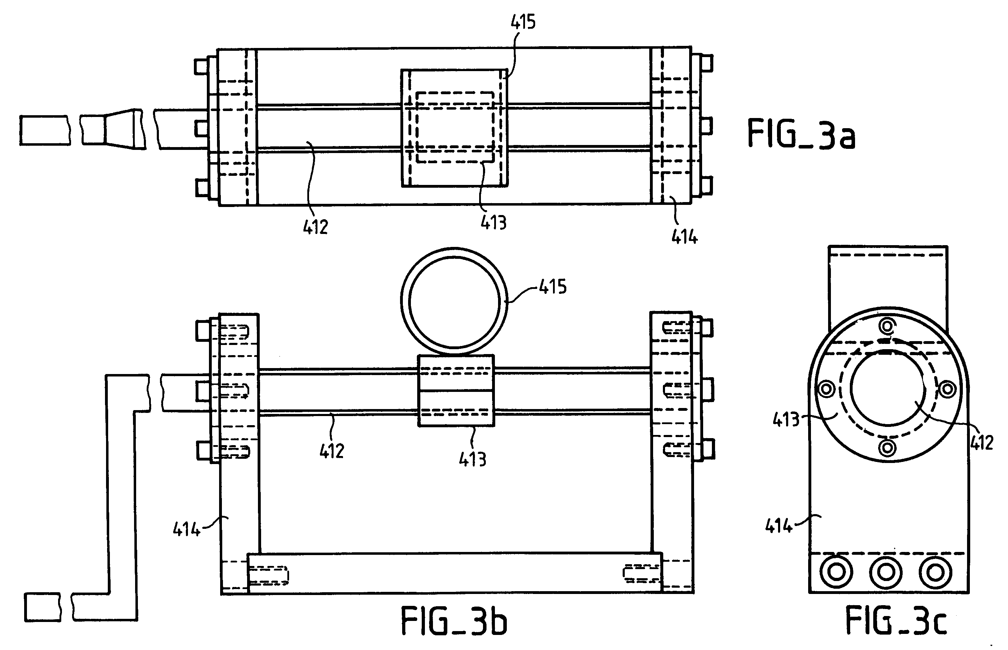

Le dispositif à vis 412 sans fin du château-avant 410, illustré en détail aux figures 3a, 3b et 3c, est porté par un cadre 414 en U fixé sur la platine 411 dans laquelle est maintenue bloquée en rotation la vis 212 sans fin du mât avant 210.

La vis 412 sans fin horizontale du château-avant 410 reçoit un écrou 413 sur lequel est mécano-soudé un morceau de tube 415 portant deux manchons de précision, non représentés, dont le diamètre intérieur est de 1/10 mm plus large que celui du canon 300 qu'ils reçoivent. Cet ensemble est disposé en permanence vers le haut.

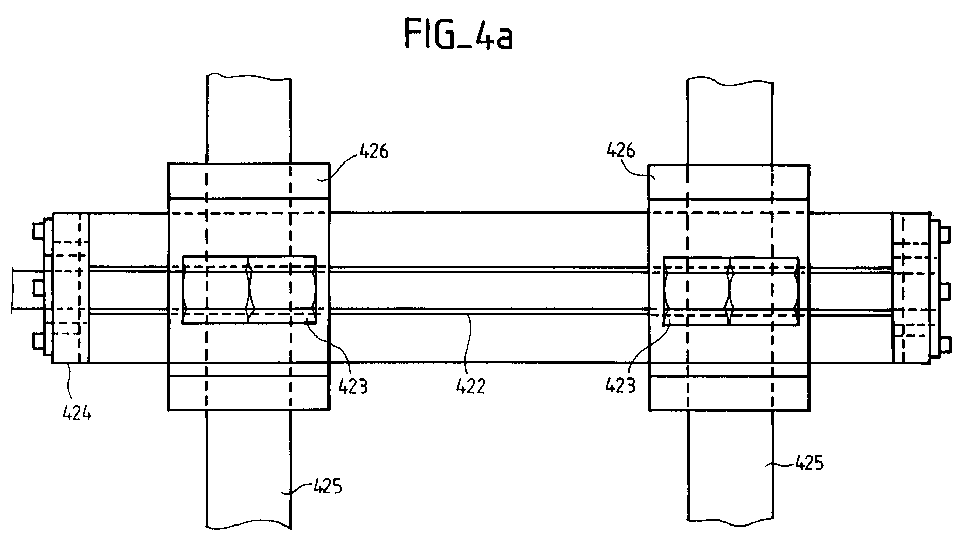

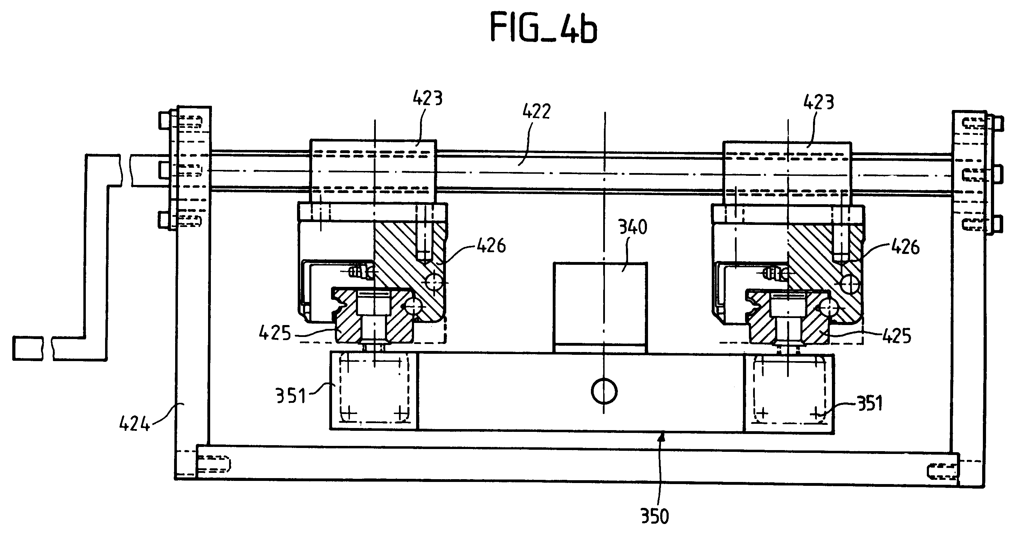

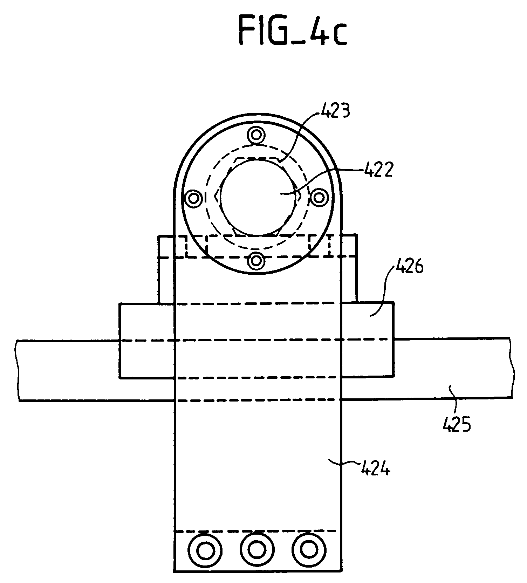

De la même manière, le dispositif à vis 422 sans fin du château-arrière 420, représenté sur les figures 4a, 4b, 4c, est porté par un cadre 424 en U fixé sur la platine 421 dans laquelle est maintenue bloquée en rotation la vis 222 sans fin du mât arrière 220.

Sur la vis 222 sans fin à manivelle du château arrière 420, sont mobiles deux écrous 423 double qui entraînent le berceau 350 en translation transversale par rapport à l'axe D1 du canon 300, lequel est emmanché en partie arrière dans le tube creux carré 340 fixé sur ledit berceau. La liaison entre les écrous 423 et le berceau 350 est réalisée par l'intermédiaire de deux rails parallèles 425 montés sur des montants longitudinaux 351 du berceau 350 et coulissant parallèlement à l'axe D1 du canon 300 dans deux suspensions 426 fixées respectivement auxdits écrous 423 double. Cet ensemble est disposé en permanence vers le bas.

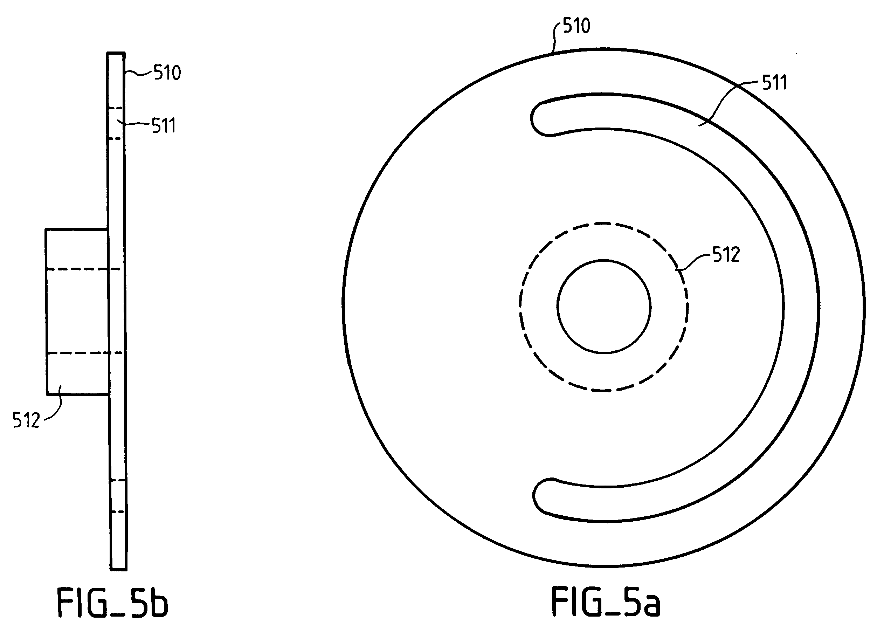

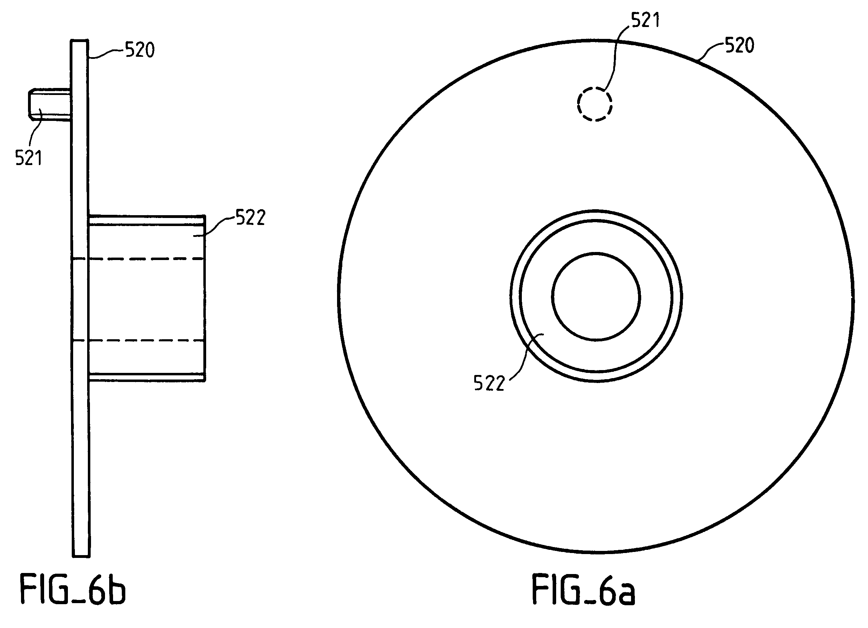

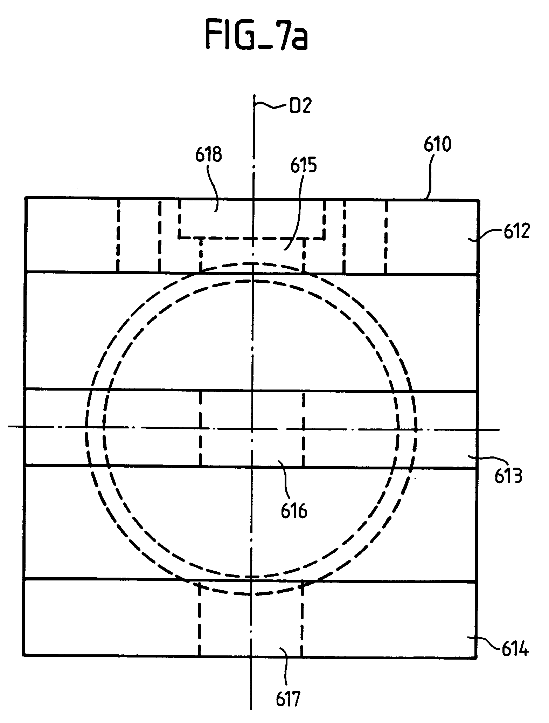

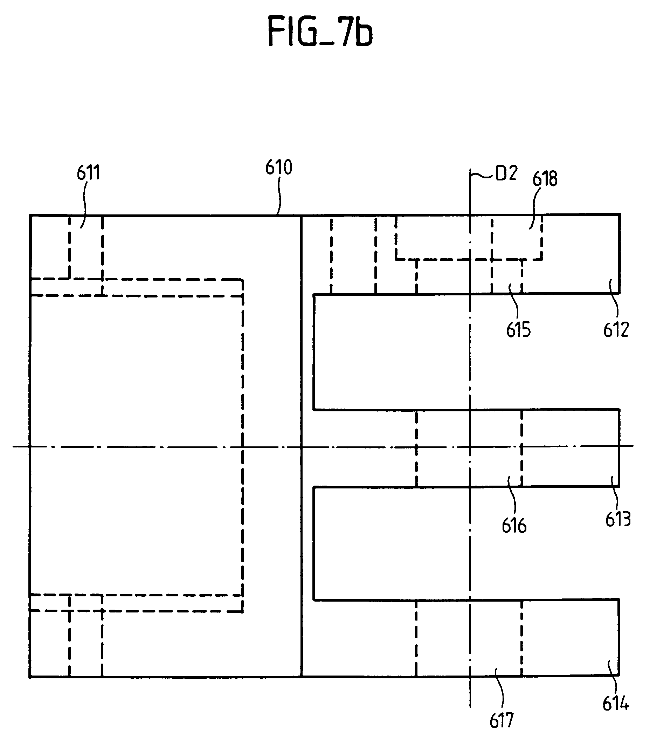

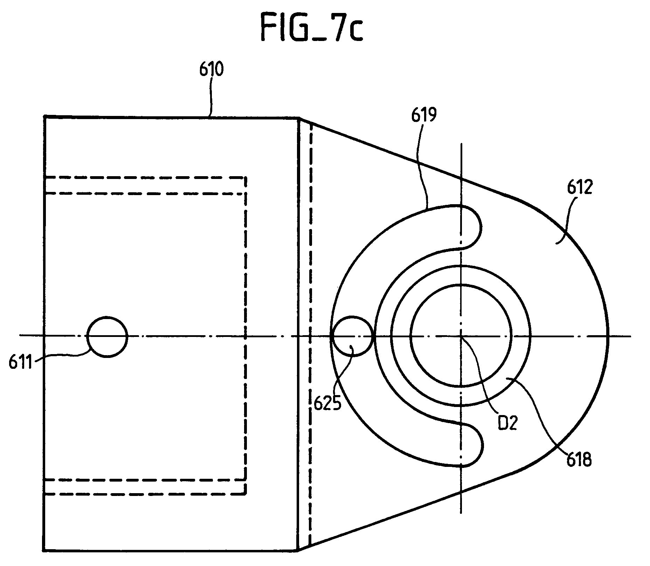

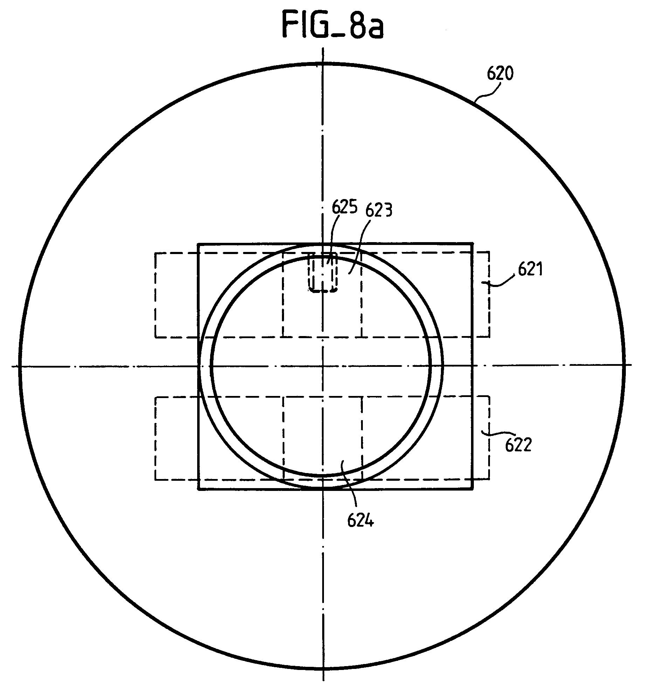

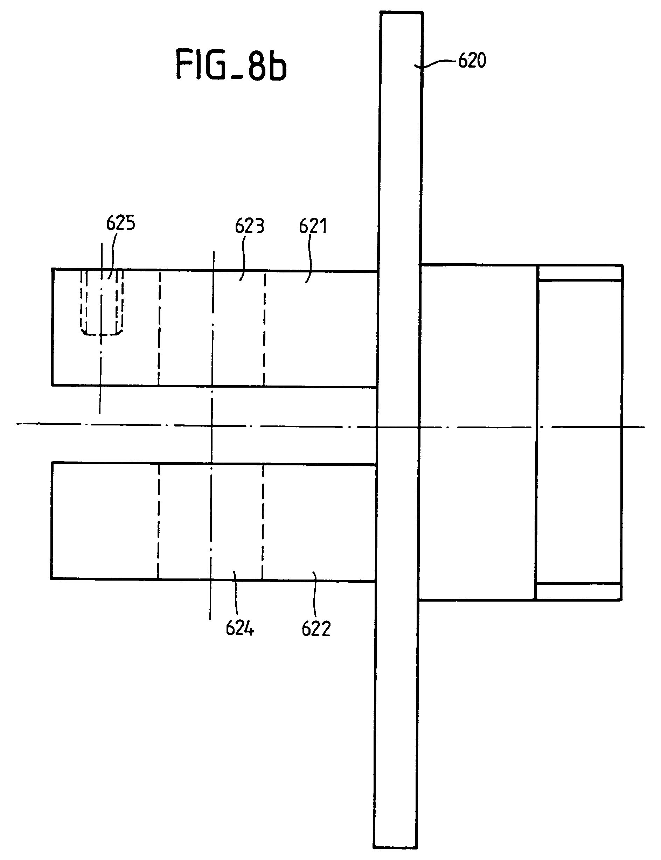

Les divers mouvements de rotation du cadre 500 porte-ventouses vont maintenant être decrits en regard des figures 5a à 8b.

Les moyens de rotation dudit cadre porte-ventouses autour de l'axe D1 du canon 300 comprennent, portées par ledit canon, d'une part, une première platine circulaire 510 fixe, immobilisée sur le canon 300 à l'aide d'une goupille, et pourvue d'un moyeu 512 central et d'une découpe circulaire 511 sur 210°, et, d'autre part, une deuxième platine 520 mobile, emmanchée librement sur le canon 300 par un moyeu 522 solidaire dudit cadre porte-ventouses et portant une vis 521 avec un pas à droite apte à se déplacer sans jeu dans la découpe 511 de la platine fixe 510.

Le mouvement de rotation des vitrines ainsi obtenu est rendu nécessaire par la déclivité des rues par rapport au cadre des vitrines. De plus, ce mouvement permet une rotation de 90° vers le haut ou vers le bas autorisant un basculement des vitrines en vue de les découper sur le couple appareil/camion.

Dans le cas où l'appareil, objet de l'invention, et sa vitrine ne peuvent être présentés perpendiculairement au plan du cadre pour des causes de mobilier urbain ou obstacles divers, il est nécessaire de pouvoir faire pivoter le cadre 500 porte-ventouses autour d'un axe D2 vertical. A cet effet, une tête 610 vissée à la platine mobile 520 et immobilisée par une goupille 611 porte des moyens d'articulation d'une tête pivotante 620 solidaire du cadre porte-ventouses, constitués par trois plaques horizontales 612, 613, 614 en E percées de trous circulaires 615, 616, 617 d'axe D2.

La tête 620 pivotante sur laquelle est fixée le cadre porte-ventouses comporte deux plaques horizontales 621, 622 qui viennent s'emboîter parfaitement entre les plaques horizontales 612, 613, 614 de la tête 610. Des trous circulaires 623, 624 percées dans les deux plaques horizontales 621, 622 sont placés en coïncidence avec les trous 615, 616, 617, de manière à pouvoir introduire un goujon dont la tête vient en appui et s'insérer complètement dans une cavité 618 de la plaque horizontale supérieure 612 de la tête 610. L'axe dudit 1 goujon étant confondu avec l'axe D2 de rotation, la tête pivotante 620 peut donc tourner autour de cet axe.

Dans le but d'immobiliser la tête pivotante 620 en position sur la tête 610, la plaque supérieure 612 de ladite tête porte une découpe circulaire 619 sur 150° concentrique à l'axe D2. En regard de cette découpe circulaire 619 la plaque supérieure 621 de la tête pivotante 620 est percée d'un trou taraudé 625 permettant l'introduction d'une vis de blocage susceptible d'être serrée contre la plaque supérieure 612 de la tête 610.

Comme l'indique la figure 1b, le cadre 500 porte-ventouses est constitué par un ensemble de barres formant un losange. Quatre ventouses 530 sont disposées le long de la grande diagonale dudit losange, tandis que deux autres ventouses 540 sont placées le long de la petite diagonale.

En outre, afin d'augmenter la portée du cadre porte-ventouses, on prévoit trois ventouses amovibles dont deux sont disposées aux extrémités de la grande diagonale de losange et une à une extrémité de la petite diagonale du losange.

La forme en losange du cadre porte-ventouses permet de poser des vitres hautes et étroites, ou même des portes sécurit.

Les figures 1a, 1b et 1c montrent que le socle 100 est composé d'un cadre rectangulaire portant des moyens de roulement constitués par deux roues avant 41 non pivotantes soudées à l'avant de l'appareil et par deux roues arrière 42 pivotantes à frein, soudées à l'arrière du socle.

Derrière les roues avant 41, on trouve des roues avant supplémentaires 51 non pivotantes sur cric 61. Il en est de même à l'arrière avec des roues supplémentaires 52 pivotantes montées sur cric 62. Les crics 61, 62 peuvent être par exemple des crics de camion.

Les paires de roues supplémentaires 51, 52 permettent de monter un trottoir ou d'autres types d'obstacles.

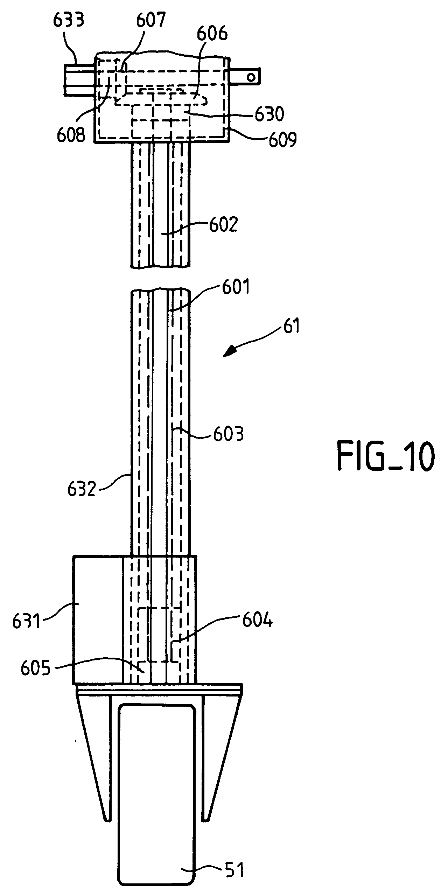

Comme on peut le voir sur la figure 10 relative au cric 61, chacun desdits crics est constitué d'une vis 601 sans fin positionnée dans un tube 602 rainuré cylindrique muni d'une ouverture longitudinale 603. La vis sans fin reçoit deux écrous cylindriques 604 soudés entre eux et calibrés avec précision au diamètre intérieur du tube 602 moins un millimètre. La partie inférieure de la vis 601 sans fin est logée dans un palier 605 solidaire du tube en son embase. La partie supérieure de la vis sans fin dépasse le tube 602 rainuré et possède en son sommet une roue dentée 606 de renvoi d'angle.

Ladite roue dentée 606 reçoit une roue dentée 607 d'entraînement, conique et horizontale, laquelle est traversée par un axe 608 en son centre qui s'insère dans un petit boitier 609 mécano-soudé au sommet du tube 602 cylindrique et rainuré. La roue dentée conique 606 au sommet de la vis 601 sans fin est posée sur une butée 630 à billes. La partie inférieure du tube 602 est munie d'une platine 631 soudée, laquelle est solidaire du cadre de roue 51 en son centre.

Un manchon cylindrique 632 rainuré, emmanché avec précision sur le tube 602 cylindrique et soudé au socle de l'appareil sur au moins deux axes sert de guidage obligé à la montée-descente du cric.

L'engrenage à tige horizontale de chacun des crics est muni d'une tête 633 hexagonale, positionnée vers l'extérieur gauche et droit de l'appareil pour pouvoir mettre les crics en mouvement à l'aide d'une manivelle amovible.

Chacune des paires de crics avant 61 et arrière 62 possède en outre un axe tel que 91 sur la figure 1b, muni d'un embrayage à deux goupilles chacune à une extrémité. Ces goupilles, non représentées, permettent d'actionner les crics simultanément ou séparément. Cet axe vient s'emmmancher sur les petits axes 608 de mise en mouvement des crics.

Aux quatre extrémités du socle 100, sont présentes des vis 71 de blocage avant et des vis 72 de blocage arrière, ces vis de blocage sont introduites dans des écrous soudés au socle. Leur bord inférieur est arrondi et les bords supérieurs reçoivent en soudage un vis dite "Allen" afin de les manoeuvrer rapidement et facilement. En outre, ces vis 71, 72 de blocage permettent de soulever l'appareil sur tribord ou sur babord et donc, en combinaison avec les mouvements précédemment décrits, de poser une vitrine dont les parecloses sont à l'intérieur.

Les figures 1a et 1b indiquent qu'à l'arrière du socle 100 et au niveau du mât arrière 220 une barre horizontale 80 de guidage est mécano-soudée aux longueurs du socle 100. Ses montants 83 ont une légère inclinaison vers l'arrière, et en plus, le centre de cette barre de guidage horizontale est soudé sous la partie supérieure du mât arrière 220 en renforcement longitudinal. Cet ensemble a pour fonction de guider le mouvement de l'appareil. Ce système est suffisant pour démarrer et guider l'appareil en charge dans tous les cas simples.

Mais en cas de démarrage difficile dû à une charge très lourde avec une pente à monter, et/ou lorsque les roues arrières pivotantes 42 ne sont pas encore dans l'axe désiré, le couple de démarrage est élevé.

Aussi, la barre arrière horizontale 80 de guidage supporte à l'aide d'aimants 82 des leviers 81 mobiles de démarrage en charge lourde et de freinage d'urgence.

Ces deux leviers 81 se terminent par des cylindres 84 de fer plein sous lesquels sont fixés des manchons 85 de caoutchouc dense.

Les cylindres 84 de fer plein rentrent dans des anneaux 86 cylindriques qui servent de guide par point d'appui non statique. Ils sont mécano-soudés à l'avant de la barre arrière extrême du socle 100.

Ainsi, d'un simple geste de chaque main on libère les leviers mobiles 81 de guidage de leur fixation aimantée supérieure et l'on s'en sert comme levier de démarrage tant longitudinal en cas de pente, que circulaire, lorsque les roues pivotantes 42 ne sont pas dans l'axe de rotation et/ou translation désiré.

Sous les aimants 52 des leviers 81, les mains de l'opérateur sont protégées par des rotules creuses 87 fixées sur les leviers, et qui en plus de leur fonction de protection servent au freinage d'urgence.

Plusieurs variantes de l'appareil de pose de vitrine, objet de l'invention, peuvent être envisagées:
- un appareil à quatre mâts latéraux fixés sur les barres longitudinales du socle et portant chacun une vis sans fin. Les sommets de ces mâts sont reliés entre eux par des plaques perpendiculaires au sens d'avancement de l'appareil et sur lesquelles sont placés les châteaux avant et arrière. Cette variante a l'avantage de pouvoir franchir des petits obstacles de mobilier urbain tels que pots de fleur, chandelles de stationnement, etc.
- un appareil en deux parties indépendantes ayant chacune un socle à quatre roues et reliées par un canon. L'avantage de cet appareil est d'offrir un rayon de braquage plus court.
- un appareil dont les roues sont remplacées par des chenilles afin d'obtenir également, à stabilité égale, un rayon de braquage plus court.
- un appareil dont les mouvements seraient motorisés à l'aide d'engrenages coniques, vis globiques, ou autres, remplaçant les manivelles à écrou.
- un appareil monté sur une table élévatrice ou sur tout véhicule qui pourrait le hisser en hauteur en toute sécurité.

## Revendications

1. Appareil de pose de vitrine de magasin caractérisé en ce qu'il comporte :
- un socle (100) muni de moyens (41, 42) de roulement,
- au moins deux moyens élévateurs (210, 220) indépendants verticaux, fixés sur ledit socle (100),
- un canon (300) supporté par lesdits moyens élévateurs (210, 220) et comprenant des moyens (310, 320, 330) de translation axiale,
- un cadre (500) porte-ventouses disposé à une extrémité dudit canon (300),
- deux moyens (410, 420) indépendants de translation transversale du canon (300), disposés aux sommets de deux moyens élévateurs (210, 220),
- des moyens (510, 520 ; 610, 620) de rotation dudit cadre (500) porte-ventouses, d'une part autour de l'axe (D1) dudit canon (300), et d'autre part autour d'un axe (D2) parallèle à la direction du mouvement des moyens élévateurs (210, 220).

2. Appareil selon la revendication 1, caractérisé en ce que lesdits moyens élévateurs sont constitués, chacun, par un mât (210, 220) vertical comprenant une vis (212, 222) sans fin dont la rotation est bloquée au moins à une extrémité, et mobile en seule translation axiale sous l'action d'un organe de levage (213, 223) notamment à écrou.

3. Appareil selon la revendication 2, caractérisé en ce que ladite vis (212, 222) sans fin de chaque mât (210, 220) est insérée dans un tube creux (211, 221) fixé à une première extrémité au socle (100) de l'appareil, et terminé à une deuxième extrémité par une surface d'appui dudit organe (213, 223) de levage notamment à écrou.

4. Appareil selon la revendication 3, caractérisé en ce que ladite surface d'appui est constituée par un manchon (214, 224) ajusté dans ledit tube creux (211, 221) et portant une butée (215, 225) à bille.

5. Appareil selon la revendication 4, caractérisé en ce que ladite vis (212, 222) sans fin est munie d'un moyen d'arrêt de fin de course.

6. Appareil selon la revendication 5, caractérisé en ce que ledit moyen d'arrêt de fin de course est constitué par un organe formant saillie disposé à la base de la vis (212, 222) sans fin et destiné à venir en butée contre ledit manchon (214, 224) et à servir de guide pour l'axe de ladite vis sans fin.

7. Appareil selon la revendication 6, caractérisé en ce que ledit organe faisant saillie est une croix métallique soudée à ladite base de la vis (212, 222) sans fin.

8. Appareil selon l'une quelconque des revendications 2 à 7, caractérisé en ce qu'au moins un mât (220) comporte un dispositif (227, 228) anti-levage de la vis (222) sans fin, destiné à éviter tout mouvement de soulèvement de ladite vis sans fin hors du tube creux (221).

9. Appareil selon la revendication 8, caractérisé en ce que ledit dispositif anti-levage comprend une bague mobile (227) le long du tube creux (221), solidaire de la vis (222) sans fin, et une bague fixe (228) sur ledit tube creux, formant butée pour ladite bague mobile (227) en cas de soulèvement de ladite vis (222) sans fin.

10. Appareil selon l'une quelconque des revendications 1 à 9, caractérisé en ce que ledit canon (300) comprend une vis (310) sans fin dont la rotation est bloquée, formant moyens de translation axiale avec au moins un dispositif (320, 330) notamment à écrou.

11. Appareil selon la revendication 10, caractérisé en ce qu'une première extrémité de la vis (310) sans fin du canon (300) est emmanchée dans un tube (340) fixé sur un berceau (350).

12. Appareil selon l'une quelconque des revendications 1 à 11, caractérisé en ce que ledit canon (300) comporte un dispositif anti-flexion.

13. Appareil selon la revendication 12, caractérisé en ce que ledit dispositif anti-flexion comprend une tige verticale (31) médiane solidaire d'un écrou fixe (32) sur la vis (310) sans fin du canon (300) et portant une poulie (33), et un câble (34) passant par ladite poulie, relié à une extrémité audit tube (340) et à une autre extrémité à une deuxième tige (36) fixée par une jambe (35) de force à une deuxième extrémité de ladite vis (310) sans fin du canon, portant le cadre (500) porte-ventouses.

14. Appareil selon l'une quelconque des revendications 1 à 13, caractérisé en ce que lesdits moyens indépendants (410, 420) de translation transversale du canon (300) comportent, chacun, un dispositif à vis (412, 422) sans fin perpendiculaire au canon, entraînant en translation transversale au moins un écrou (413, 423) solidaire dudit canon (300).

15. Appareil selon la revendication 14, caractérisé en ce que ledit dispositif à vis (412, 422) sans fin est fixé au sommet du moyen élévateur (210, 220) correspondant par un cadre (414, 424) en U.

16. Appareil selon la revendication 15, caractérisé en ce que la vis (212, 222) sans fin dudit moyen élévateur (210, 220) est fixée à une deuxième extrémité à une platine (411, 421) portant ledit cadre (414, 424) en U.

17. Appareil selon la revendication 11 et l'une quelconque des revendications 14 à 16, caractérisé en ce que ledit berceau (350) est solidaire de deux écrous (423) du dispositif à vis (422) sans fin par l'intermédiaire de deux rails (425) parallèles fixés sur des montants longitudinaux (351) du berceau (350) et coulissant axialement dans deux suspensions (426) fixées respectivement auxdits écrous (423).

18. Appareil selon l'une quelconque des revendications 1 à 17, caractérisé en ce que lesdits moyens de rotation du cadre (500) porte-ventouses autour de l'axe (D1) du canon (300) comprennent, portées par le canon, d'une part, une première platine circulaire (510), fixe par rapport audit canon (300) et pourvue d'une découpe (511) circulaire concentrique au canon, et, d'autre part, une deuxième platine (520) mobile, solidaire dudit cadre (500) porte-ventouses et portant une vis (521) apte à se déplacer dans la découpe (511) de ladite platine fixe (510).

19. Appareil selon la revendication 18, caractérisé en ce que lesdits moyens de rotation du cadre (500) porte-ventouses autour d'un axe parallèle (D2) à la direction du mouvement des moyens élévateurs (210, 220) comprennent une tête (610) fixe par rapport à la platine (520) mobile, et portant des moyens d'articulation autour dudit axe d'une tête (620) pivotante solidaire du cadre (500) porte-ventouses.

20. Appareil selon l'une quelconque des revendications 1 à 19, caractérisé en ce que le cadre (500) porte-ventouses est constitué par un ensemble de barres définissant un losange.

21. Appareil selon l'une des revendications 20 ou 21, caractérisé en ce que le cadre (500) porte-ventouses comporte quatre (530) et deux (540) ventouses disposées respectivement le long de la grande et de la petite diagonale dudit losange.

22. Appareil selon l'une des revendications 20 ou 21, caractérisé en ce que ledit cadre (500) porte-ventouses comporte deux et une ventouses auxiliaires amovibles, disposées respectivement aux extrémités de la grande diagonale et à une extrémité de la petite diagonale du losange.

23. Appareil selon l'une quelconque des revendications 1 à 22, caractérisé en ce que le socle (100) est composé d'un cadre rectangulaire portant des moyens de roulement constitués de deux roues avant (41) et deux roues arrière (42), ainsi que de deux roues supplémentaires avant (51) et arrière (52) portant chacune un cric (61, 62) apte à faire monter et descendre lesdites roues supplémentaires dans leur axe, lesdits crics étant accouplés par paire à l'aide d'un manchon (91) télescopique amovible.

24. Appareil selon l'une quelconque des revendications 1 à 23, caractérisé en ce que le socle (100) est muni de vis (71, 72) de blocage de l'appareil à l'arrêt.

25. Appareil selon l'une quelconque des revendications 1 à 24, caractérisé en ce que le socle (100) comporte une barre arrière (80) horizontale de guidage de l'appareil.

26. Appareil selon la revendication 25, caractérisé en ce que ladite barre arrière (80) horizontale de guidage porte des leviers mobiles (81) de démarrage en charge lourde et de freinage d'urgence.

27. Appareil selon la revendication 26, caractérisé en ce que lesdits leviers mobiles (80) sont suspendus par des aimants (82) à la barre arrière horizontale (80) de guidage.

## Claims

1. A device for fitting shop windows, characterised in that said device comprises:
- a base (100) provided with roller means (41, 42),
- at least two independent vertical hoisting means (210, 220) fixed to said base (100),
- a ram (300) supported by said hoisting means (210, 220) and comprising axial translation means (310, 320, 330),
- a suction cap structure (500) positioned at one end of said ram (300),
- two independent means (410, 420) for the transversal translation of the ram (300), positioned at the top points of said hoisting means (210, 220),
- means (510, 520; 610, 620) for the rotation of said suction cap structure (500), firstly about the axis (D1) of said ram (300) and secondly about an axis (D2) parallel to the direction of the motion of the hoisting means (210, 220).

2. Device according to claim 1, characterised in that said hoisting means are each formed by a vertical mast (210, 220) comprising a worm screw (212, 222) that has its rotation blocked at least at one end and is movable only in axial translation under the effect of a lifting unit (213, 223), in particular, a nut-operated lifting unit.

3. Device according to claim 2, characterized in that said worm screw (212, 222) of each mast (210, 220) is inserted into a hollow tube (211, 221) fixed at a first end to the base (100) of the device and terminated at a second end by a surface for the supporting of said lifting unit (213, 223) which is, in particular, a nut-operated lifting unit.

4. Device according to claim 3, characterized in that said supporting surface is constituted by a sleeve (214, 224) fitted into said hollow tube (211, 221) and bearing a ball thrust bearing (215, 225).

5. Device according to claim 4, characterized in that said worm screw (212, 222) is provided with an end-of-travel stopping means.

6. Device according to claim 5, characterized in that said end-of-travel stopping means are constituted by a projecting element positioned at the base of the worm screw (212, 222) and designed to abut said sleeve (214, 224) and to be used as a guide for the axis of said worm screw.

7. Device according to claim 6, characterized in that said projecting element is a metal cross welded to said base of the worm screw (212, 222).

8. Device according to any of the claims 2 to 7, characterized in that at least one mast (220) has a device (227, 228) to prevent the lifting of the worm screw (222) designed to prevent any movement of the lifting of said worm screw out of the hollow tube (221).

9. Device according to claim 8, characterized in that said lift-preventing device has a mobile ring (227) along the hollow tube (221), fixedly joined to worm screw (222), and a fixed ring (228) on said hollow tube, forming a stop for said mobile ring (227) in the event of a lifting of said worm screw (222).

10. Device according to any of the claims 1 to 9, chracterized in that said ram (300) comprises a worm screw (310) whose rotation is stopped, forming axial translation means with at least one device (320, 330), especially a nut-operated device.

11. Device according to claim 10, characterized in that the first end of the worm screw (310) of the ram (300) is force-fitted into a tube (340) fixed to a cradle (350).

12. Device according to any of the claims 1 to 11, characterized in that said ram (300) has a deflection-preventive device.

13. Device according to claim 12, characterized in that said deflection-preventive device has a median vertical rod (31) fixedly joined to a nut (32) fixed to the worm screw (310) of the ram (300) and bearing a pulley (33) and a cable (34) passing through said pulley, connected at one end to said tube (340) and at another end to a second rod (36) fixed by a prop (35) to a second end of said worm screw (310) of the ram, bearing the suction cap structure (500).

14. Device according to any of the claims 1 to 13, characterised in that said independent means (410, 420) for the transversal translation of the ram (300) each comprise a worm screw device (412, 422) perpendicular to the ram, driving at least one nut (413, 423) fixedly joined to said ram (300) in transversal translation.

15. Device according to claim 14, characterized in that said worm screw device (412, 422) is fixed to the top of the corresponding hoisting means (210, 220) by a U-shaped frame (414, 424)

16. Device according to claim 15, characterized in that the worm screw (212, 222) of said hoisting means (210, 220) is fixed at a second end to a plate (411, 421) bearing said U-shaped frame (414, 424).

17. Device according to claim 11 and any of the claims 14 to 16, characterized in that said cradle (350) is fixedly joined to two nuts (423) of the worm screw device (422) by means of two parallel rails (425) fixed to longitudinal uprights (351) of the cradle (350) and sliding axially in two suspension elements (426) respectively fixed to said nuts (423).

18. Device according to any of the claims 1 to 17, characterized in that said means for rotating the suction cap structure (500) about the axis (D1) of the ram (300) comprise, borne by the ram, firstly, a first circular deck (510), fixed with respect to said ram (300) and provided with a circular slot (511) concentric to the ram and, secondly, a mobile second deck (520), fixedly joined to said suction cap structure (500) and bearing a screw (521) capable of shifting in the slot (511) of said fixed deck (510).

19. Device according claim 18, characterized in that said means for the rotation of the suction cap structure (500) about an axis (D2) parallel to the direction of the motion of the hoisting means (210, 220) include a head (610) fixed with respect to the mobile deck (520) and bearing means for the hinging on said axis of a pivoting head (620) fixedly joined to the suction cap structure (500).

20. Device according to any of the claims 1 to 19, characterized in that the suction cap structure (500) is constituted by a set of bars defining a diamond.

21. Device according to any of the claims 20 or 21, characterized in that suction cap structure (500) comprises four (530) and two (540) suction caps positioned respectively along the large diagonal and the small diagonal of said diamond.

22. Device according to one of the claims 20 or 21, characterized in that said suction cap structure (500) has two detachable auxiliary suction caps and one detachable auxiliary suction cap placed respectively at the ends of the large diagonal and at one end of the small diagonal of the diamond.

23. Device according to any of the claims 1 to 22, characterized in that the base (100) is formed by a rectangular frame bearing roller means constituted by two front wheels (41) and two rear wheels (42) as well as two additional front (51) and rear (52) wheels each bearing a jack (61, 62) capable of making said additional wheels rise and descend along their axis, said jacks being coupled in pairs by means of a detachable, telescopic sleeve (91).

24. Device according to any of the claims 1 to 23, characterized in that the base (100) is provided with screws (71, 72) for locking the device when it is at a stop.

25. Device according to any of the claims 1 to 24, characterized in that the base (100) comprises a horizontal rear bar (80) for the guidance of the device.

26. Device according to claim 25, characterized in that said horizontal guidance bar (80) bears mobile levers (81) for starting under heavy loads and for emergency braking.

27. Device according to claim 26, characterized in that said mobile levers (80) are suspended by magnets (82) from the horizontal rear guidance bar (80).

## Patentansprüche

1. Vorrichtung zum Stellen einer Glasscheibe für einen Laden, **dadurch gekennzeichnet,** daß sie umfaßt:
- ein Untergestell (100) versehen mit Mitteln (41, 42) zum Rollen,
- zumindest zwei voneinander unabhängige, vertikale Hubeinrichtungen (210, 220), die am Untergestell (100) festgelegt sind,
- eine von den Hubeinrichtungen (210, 220) getragene Pinole (300), die Mittel (310, 320, 330) für eine Axialverschiebung aufweist,
- einen Saugnapftragrahmen (500), angeordnet an einem Ende der Pinole (300),
- zwei voneinander unabhängige Mittel (410, 420) für eine Querverschiebung der Pinole (300), die am oberen Ende der Hubeinrichtungen (210, 220) angeordnet sind,
- Mittel (510, 520; 610, 620) für die Drehung des Saugnapfrahmens (500), einerseits um die Achse (D1) der Pinole (300) und andererseits um eine Achse (D2) parallel zur Bewegungsrichtung der Hubeinrichtungen (210, 220).

2. Vorrichtung nach Anspruch 1, dadurch gekennzeichnet, daß die Hubeinrichtungen jeweils gebildet sind durch einen vertikalen Mast (210, 220), der jeweils eine Schraube (212, 222) ohne Ende umfaßt, deren Rotation zumindest an einem Ende blockiert ist und die nur in axialer Richtung unter der Wirkung eines Hebeorgans (213, 223), insbesondere einer Mutter verschiebbar ist.

3. Vorrichtung nach Anspruch 2, dadurch gekennzeichnet, daß die Schraube (212, 222) ohne Ende eines jeden Mastes (210, 220) in ein hohles Rohr (211, 221) eingesetzt ist, das an einem ersten Ende am Untergestell (100) der Vorrichtung befestigt ist und an einem zweiten Ende an einer Stützfläche des Hebeorgans (213, 223), insbesondere der Schraube, endet.

4. Vorrichtung nach Anspruch 3, dadurch gekennzeichnet, daß die Stützfläche durch eine an dem hohlen Rohr (211, 221) angepaßte Muffe (214, 224) gebildet ist und ein Axialkugellager (215, 225) trägt.

5. Vorrichtung nach Anspruch 4, dadurch gekennzeichnet, daß jede Schraube (212, 222) ohne Ende mit einem Wegbegrenzungsmittel versehen ist.

6. Vorrichtung nach Anspruch 5, dadurch gekennzeichnet, daß das Wegbegrenzungsmittel durch ein einen Vorsprung bildendes Organ gebildet ist, das am Fuß der Schraube (212, 222) ohne Ende angeordnet ist und dazu bestimmt ist, in Anschlag an die Muffe (214, 224) zu kommen und als Führung für die Achse der Schraube ohne Ende zu dienen.

7. Vorrichtung nach Anspruch 6, dadurch gekennzeichnet, daß jedes Organ, welches einen Vorsprung bildet, ein metallisches Kreuz ist, das am Fuß der Schraube (212, 222) ohne Ende festgeschweißt ist.

8. Vorrichtung nach einem der Ansprüche 2 bis 7, dadurch gekennzeichnet, daß zumindest ein Mast (220) eine Anhebeblockiervorrichtung (227, 228) für die Schraube (222) ohne Ende umfaßt, die jede Hebebewegung dieser Schraube ohne Ende aus dem hohlen Rohr (221) heraus verhindert.

9. Vorrichtung nach Anspruch 8, dadurch gekennzeichnet, daß die Anhebeblockiervorrichtung einen entlang des hohlen Rohres (221) bewegbaren Ring (227) aufweist, der fest mit der Schraube (222) ohne Ende verbunden ist sowie einen auf dem hohlen Rohr befestigten Ring (228), der einen Anschlag für den bewegbaren Ring (227) im Falle des Anhebens der Schraube (222) ohne Ende bildet.

10. Vorrichtung nach einem der Ansprüche 1 bis 9, dadurch gekennzeichnet, daß die Pinole (300), die eine Schraube (310) ohne Ende aufweist, deren Rotation blockiert ist, Mittel für eine axiale Verschiebung zusammen mit zumindest einer Vorrichtung (320, 330) insbesondere einer Schraube bildet.

11. Vorrichtung nach Anspruch 10, dadurch gekennzeichnet, daß ein erstes Ende der Schraube (310) ohne Ende der Pinole (300) in ein Rohr (340) eingepreßt ist, das auf einer Rohrwiege (350) festgelegt ist.

12. Vorrichtung nach einem der Ansprüche 1 bis 11, dadurch gekennzeichnet, daß die Pinole (300) eine Vorrichtung zur Verhinderung einer Durchbiegung aufweist.

13. Vorrichtung nach Anspruch 12, dadurch gekennzeichnet, daß die Vorrichtung zur Verhinderung einer Durchbiegung eine in der Mitte befindliche, vertikale Stange (31) umfaßt, die mit einer Mutter (32) fest verbunden ist, die auf der Schraube (31) ohne Ende der Pinole (30) festgelegt ist und eine Rolle (33) trägt und ein Kabel (34), welches über diese Rolle läuft, ist mit einem Ende des Rohres (340) und mit dem anderen Ende an einer zweiten Stange (36) verbunden, die durch eine Strebe (35) an einem zweiten Ende der Schraube (310) ohne Ende der Pinole befestigt ist, die den Saugnapftragrahmen (500) trägt.

14. Vorrichtung nach einem der Ansprüche 1 bis 13, dadurch gekennzeichnet, daß die unabhängigen Mittel (410, 420) für die Querverschiebung der Pinole (30) jeweils eine Vorrichtung mit einer Schraube (412, 422) ohne Ende umfaßt, die rechtwinklig zur Pinole steht und zumindest eine Mutter (413, 423), die fest mit der Pinole (300) verbunden ist, in Querverschieberichtung antreibt.

15. Vorrichtung nach Anspruch 14, dadurch gekennzeichnet, daß die Vorrichtung mit einer Schraube (412, 422) ohne Ende am oberen Ende des Hebemittel (210, 220) befestigt ist, der mit dem U-förmigen Rahmen (414, 424) übereinstimmt.

16. Vorrichtung nach Anspruch 15, dadurch gekennzeichnet, daß die Schraube (212, 222) ohne Ende des Hebemittels (210, 220) an einem zweiten Ende mit einer Platte (411, 421) verbunden ist, die den U-förmigen Rahmen (414, 424) trägt.

17. Vorrichtung nach Anspruch 11 und einem der Ansprüche 14 bis 16, dadurch gekennzeichnet, daß die Rohrwiege (350) mit zwei Muttern (423) der Vorrichtung mit Schraube (422) ohne Ende durch Zwischenschaltung von zwei parallelen Schienen (425) fest verbunden ist, die auf Längsstreben (351) der Rohrwiege (350) befestigt sind und in Achsrichtung in zwei Aufhängungen (426) gleiten, die jeweils an den Muttern (423) festgelegt sind.

18. Vorrichtung nach einem der Ansprüche 1 bis 17, dadurch gekennzeichnet, daß die Mittel zur Drehung des Saugnapftragrahmens (500) um die Achse (D1) der Pinole (3) einerseits eine erste kreisförmige Platte (510), die fest in bezug auf die Pinole (300) ist und mit einem Ausschnitt (511) versehen ist, der kreisförmig und konzentrisch zur Pinole ausgebildet ist und andererseits eine zweite bewegliche Platte (520) aufweisen, die fest mit dem Saugnapftragrahmen (500) verbunden ist und eine Schraube (521) trägt, die in der Lage ist sich in dem Ausschnitt (511) der festen Platte (510) zu bewegen, wobei die beiden Platten von der Pinole getragen sind.

19. Vorrichtung nach Anspruch 18, dadurch gekennzeichnet, daß die Mittel zur Drehung des Saugnapftragrahmens (500) um eine parallel zur Hubrichtung der Hebemittel (210, 220) verlaufende Achse (D2) einen Kopf (610) aufweisen, der in bezug auf die bewegliche Platte (520) fest ist und die Mittel zur Drehung eines schwenkbaren Kopfes (620) um diese Achse trägt, der fest mit dem Saugnapftragrahmen (500) verbunden ist.

20. Vorrichtung nach einem der Ansprüche 1 bis 19, dadurch gekennzeichnet, daß der Saugnapftragrahmen (500) durch den Zusammenbau von Stäben gebildet ist, die eine Raute definieren.

21. Vorrichtung nach Anspruch 20 oder 21, dadurch gekennzeichnet, daß der Saugnapftragrahmen (500) vier Saugnäpfe (530) und zwei Saugnäpfe (540) aufweist, die entlang der großen bzw. der kleinen Achse der Raute angeordnet sind.

22. Vorrichtung nach Anspruch 20 oder 21, dadurch gekennzeichnet, daß der Saugnapftragrahmen (500) zwei abnehmbare Hilfssaugnäpfe, die an den Enden der großen Diagonale und einen abnehmbaren Hilfssaugnapf aufweist, der an einem Ende der kleinen Achse der Raute angeordnet ist.

23. Vorrichtung nach einem der Ansprüche 1 bis 22, dadurch gekennzeichnet, daß das Untergestell (100) aus einem rechteckigen Rahmen besteht, der die Mittel zum Rollen trägt, die aus zwei Vorderrädern (41) und zwei Hinterrädern (42) bestehen sowie zwei zusätzliche Vorderräder (51) und zusätzliche Hinterräder (52) umfaßt, die jeweils einen Wagenheber (61, 62) tragen, der in der Lage ist, die zusätzlichen Räder anzuheben und abzusenken, wobei diese Wagenheber mit Hilfe einer abnehmbaren Teleskopmuffe (91) zu einem Paar verbindbar sind.

24. Vorrichtung nach einem der Ansprüche 1 bis 23, dadurch gekennzeichnet, daß das Untergestell (100) mit Spindeln (71, 72) zum Festlegen der Vorrichtung am Standort versehen ist.

25. Vorrichtung nach einem der Ansprüche 1 bis 24, dadurch gekennzeichnet, daß das Untergestell (100) eine hintere horizontale Stange (80) zur Führung der Vorrichtung aufweist.

26. Vorrichtung nach Anspruch 25, dadurch gekennzeichnet, daß die hintere horizontale Führungsstange (80) bewegbare Hebel (81) für den Anfahrvorgang bei schwerer Last und die Notbremsung aufweist.

27. Vorrichtung nach Anspruch 26, dadurch gekennzeichnet, daß die bewegbaren Hebel (28) durch Magnete (82) an der hinteren Führungsstange (80) aufgehängt sind.
